Europäisches Patentamt

European Patent Office

Office européen des brevets

(19)

(11) **EP 0 702 327 B1**

(12) **FASCICULE DE BREVET EUROPEEN**

(45) Date de publication et mention
de la délivrance du brevet:
**17.08.2005  Bulletin 2005/33**

(51) Int Cl.7: **G06T 7/20**

(21) Numéro de dépôt: **95401910.5**

(22) Date de dépôt: **18.08.1995**

(54) **Dispositif d'estimation de mouvement**

Vorrichtung zur Bewegungsbestimmung

Movement estimation device

(84) Etats contractants désignés:
**DE FR GB IT**

(30) Priorité: **19.08.1994  FR 9410158**

(43) Date de publication de la demande:
**20.03.1996  Bulletin 1996/12**

(73) Titulaire: **THOMSON multimedia
92648 Boulogne Cédex (FR)**

(72) Inventeurs:
• **Pirson, Alain
F-92050 Paris La Défense (FR)**
• **Bard, Jean-Michel
F-92050 Paris La Défense (FR)**

• **Paul, Philippe
F-92050 Paris La Défense (FR)**

(74) Mandataire: **Zhang, Jianguo et al
THOMSON multimedia,
46 quai A. Le Gallo
92648 Boulogne Cédex (FR)**

(56) Documents cités:
**EP-A- 0 276 434        EP-A- 0 395 293
EP-A- 0 415 737**

• **IEEE TRANSACTIONS ON CIRCUITS AND
SYSTEMS, vol. 36, no. 10, NEW YORK US, pages
1309-1316, XP 000085318 LUC DE VOS ET AL.
'Parametrizable VLSI Architectures for the
full-search Block-matching algorithm'**

**Description**

La présente invention concerne un dispositif d'estimation de mouvement et de détermination de vecteurs mouvement dans un système de compression d'images à base de blocs de pixels. Le dispositif conforme à l'invention est utilisé notamment dans la compression d'images de télévision et dans des systèmes basés sur les standards ou futurs standards de compression MPEG (pour "Motion picture expert group").

Un certain nombre de systèmes de compression d'images sont basés sur un traitement par blocs de pixels. Dans le cas de MPEG, les images sont divisées en blocs de 8*8 pixels, quatre blocs étant rassemblés en un macrobloc de 16*16 pixels. Les blocs ou les macroblocs subissent divers traitements pour la réduction de la redondance entre images et à l'intérieur d'une même image. Un des traitements utilisés est l'estimation de mouvement. Ce procédé consiste à estimer le déplacement d'une partie de l'image courante par rapport à des images précédentes ou futures. On détermine ainsi un ou plusieurs vecteurs mouvement qui définissent le déplacement. Ces vecteurs mouvement permettent d'obtenir, à partir des images précédentes ou futures, une prédiction de l'image courante. On détermine alors la différence entre cette prédiction et l'image courante, et c'est cette différence qui est utilisée pour la suite de la compression. Actuellement, des vecteurs mouvement sont utilisés pour des images dites "inter" et "bi-directionnelles", mais peuvent l'être également pour des images dites "intra", dans le but de réduire les effets d'éventuelles erreurs de transmission.

L'estimation de mouvement est généralement effectuée pour chaque macrobloc. Dans ce qui suit, pour simplifier les explications, on associera un seul vecteur mouvement à chaque macrobloc, ce vecteur étant déterminé à partir d'une image précédente pour un macrobloc de l'image courante. En lieu et place d'une image précédente, on peut également utiliser une image de référence stockée dans l'encodeur, cette image correspondant à l'image décodée par un décodeur (c'est à dire une image tenant compte des pertes d'information dues à la compression).

Une technique pour déterminer le "meilleur" macrobloc dans l'image de référence consiste à comparer le macrobloc courant à des blocs de taille semblable de l'image de référence. En tant que critère de comparaison, on définit une fonction d'erreur Err, calculée pour chaque position possible du macrobloc dans l'image de référence. La position donnant la plus faible valeur pour la fonction Err déterminera le vecteur déplacement. Ce dernier peut avoir diverses précisions, suivant la capacité de calcul disponible et la bande passante réservée au codage des vecteurs mouvement. Une précision d'une fraction de pixel peut être implémentée par interpolation inter-pixel. Si les vecteurs mouvement sont limités en longueur, une fenêtre de recherche de taille appropriée est placée autour de la position définie par le macrobloc courant.

Le calcul des vecteurs mouvement exige de grandes capacités de calcul, qui augmentent avec la précision désirée, la résolution de l'image, leur fréquence etc...

Une fonction d'erreur classiquement utilisée est:

$$Err(m,n) = \sum_{i} \sum_{j} D(a(i,j) - b(i+m, j+n))$$

où i et j désignent des positions à l'intérieur d'un macrobloc, où m et n désignent les coordonnées d'un vecteur mouvement et où a et b désignent respectivement des valeurs de luminance de pixels du macrobloc courant et du macrobloc déplacé de la fenêtre ou image de recherche.

La fonction D peut être par exemple D(x,y)= |x-y|.

Le document EP0276434A1 décrit un dispositif d'estimation de mouvement comportant un réseau d'éléments de calcul.

Pour plus d'informations sur l'utilisation de vecteurs mouvement dans la compression d'images aux normes MPEG, on se reportera à:

"Information technology, Generic coding of moving pictures and associated audio, Recommendation H.262 ISO/IEC 13818-2 (Video) Committee Draft of November 1993."

L'invention a pour but de proposer un processeur de comparaison de blocs ("Block matching processor") possédant une architecture particulièrement avantageuse.

L'invention a pour objet un dispositif d'estimation de mouvement par comparaison de blocs dans un système de compression d'images à base de blocs comprenant:

N lignes de M colonnes de moyens de calcul d'une fonction d'erreur entre deux valeurs,
des premiers moyens de mémorisation pour mémoriser des valeurs représentant un bloc dont le mouvement est à estimer,

des seconds moyens de mémorisation pour mémoriser des valeurs de fenêtre de référence,

les premiers et seconds moyens de mémorisation étant disposés de façon à présenter chacun respectivement une valeur mémorisée à chaque moyen de calcul;

des moyens d'accumulation pour accumuler les valeurs de la fonction d'erreur;

caractérisé en ce que les premiers moyens de mémorisation de valeurs représentant le bloc dont le mouvement est à estimer comportent des mémoires pour mémoriser deux valeurs de pixels, et un multiplexeur pour multiplexer une des valeurs vers les moyens de calcul de la fonction d'erreur.

Selon un mode de réalisation particulier, le dispositif comprend N lignes de M colonnes de moyens de calcul, N lignes de M colonnes des premiers moyens de mémorisation, N lignes de M colonnes des seconds moyens de mémorisation et M moyens d'accumulation en série pour accumuler les valeurs de la fonction d'erreur pour une colonne de N moyens de calcul, la sortie d'un moyen d'accumulation étant reliée à l'entrée du moyen d'accumulation suivant de façon à introduire un retard fonction de la propagation du bloc de la fenêtre de référence dans le réseau formé par lesdits moyens de mémorisation.

Selon un mode de réalisation particulier, le dispositif comprend N lignes de M seconds moyens de mémorisation reliés en série dans chaque ligne, pour propager une bande de la fenêtre de référence colonne par colonne dans le réseau ainsi formé.

Selon un mode de réalisation particulier, la sortie de chaque second moyen de mémorisation est reliée à l'entrée d'un moyen de calcul de la fonction d'erreur.

Selon un mode de réalisation particulier, chaque moyen de calcul calcule une fonction d'erreur à partir de la valeur en sortie du second moyen de mémorisation auquel le moyen de calcul est relié et d'une valeur représentant le bloc dont le mouvement est à estimer.

Selon un mode de réalisation particulier, le résultat du calcul de chacun des moyens de calcul est mémorisé dans un buffer respectif.

Selon un mode de réalisation particulier, les deux valeurs représentent respectivement deux sous-blocs inférieur et supérieur d'un même bloc, les valeurs fournies au réseau de seconds moyens de mémorisation étant alternativement des valeurs représentant une sous-bande supérieure et une sous-bande inférieure de la fenêtre de référence, ce fonctionnement étant dit fonctionnement en mode entrelacé.

Selon un mode de réalisation particulier, ledit dispositif comporte des moyens d'addition des valeurs cumulées de la fonction d'erreur correspondant à ces deux sous-blocs.

Selon un mode de réalisation particulier, lors du mode entrelacé, un retard supplémentaire d'un cycle de calcul est introduit entre les additionneurs.

Selon un mode de réalisation particulier, les deux valeurs représentent respectivement des blocs différents, les valeurs fournies au réseau de seconds moyens de mémorisation étant alternativement des valeurs représentant une bande de référence relative au premier bloc et au second bloc.

Selon un mode de réalisation particulier, chaque ligne de buffers est alimentée par des moyens de mémorisation d'une ligne de la fenêtre de référence.

Selon un mode de réalisation particulier, lesdits moyens de mémorisation sont des piles premier entré premier sorti.

Selon un mode de réalisation particulier, il y a au moins N+1 moyens de mémorisation de lignes, et que lorsque N desdits au moins N+1 moyens de mémorisation alimentent les N lignes seconds moyens de mémorisation, les moyens de mémorisation de ligne autres que lesdits N moyens de mémorisation sont chargés avec des valeurs correspondant aux lignes qui diffèrent entre la bande de la fenêtre de référence mémorisée dans lesdits N moyens de mémorisation de lignes et la bande dont le traitement est immédiatement consécutif.

Selon un mode de réalisation particulier, le dispositif comprend un circuit de commutation entre les moyens de mémorisation de lignes et le réseau de seconds moyens de mémorisation, lesdits moyens de commutation reliant les moyens de mémorisation de lignes aux lignes appropriées des seconds moyens de mémorisation.

L'invention a aussi pour objet un système de compression d'images, caractérisé en ce qu'il comprend un dispositif tel que défini ci-dessus.

L'invention a aussi pour objet un dispositif d'estimation de mouvement par comparaison de blocs dans un système de compression d'images à base de blocs comprenant une matrice de cellules, chaque cellule comportant:

des moyens de calcul d'une fonction d'erreur entre une valeur de bloc et une valeur de fenêtre de référence;

caractérisé en ce que chaque cellule comporte en outre des moyens de mémorisation pour mémoriser une pluralité de valeurs représentatives d'au moins un bloc dont le mouvement est à estimer;

un multiplexeur connecté aux moyens de mémorisation pour multiplexer l'une de la pluralité de valeurs vers les moyens de calcul.

D'autres caractéristiques et avantages de l'invention apparaîtront à travers la description d'un exemple de réalisation particulier non limitatif illustré par les figures jointes, parmi lesquelles:

- la figure 1 représente un diagramme fonctionnel d'un processeur d'estimation de mouvement conforme à l'exemple de réalisation de l'invention,
- les figures 2a et 2b représentent schématiquement la stratégie de comparaison employée suivant l'exemple de réalisation,
- la figure 3 représente un diagramme fonctionnel d'un réseau systolique conforme à l'exemple de réalisation,
- la figure 4 représente un diagramme fonctionnel d'une cellule dite "S" du réseau systolique de la figure 3,
- la figure 5 représente un diagramme fonctionnel d'un réseau systolique simplifié conforme à l'invention permettant l'illustration du fonctionnement en mode non-entrelacé,
- la figure 6 représente un diagramme fonctionnel d'un réseau systolique simplifié conforme à l'invention permettant l'illustration du fonctionnement en mode entrelacé,
- la figure 7 représente un diagramme fonctionnel du coprocesseur suivant une première variante de l'exemple de réalisation,
- la figure 8 représente un diagramme fonctionnel du coprocesseur suivant une première variante de l'exemple de réalisation.

Le dispositif conforme à l'invention permet de calculer différents types de vecteurs mouvement, suivant les exigences du standard MPEG: vecteurs pour trames ou images, vecteurs d'une image précédente vers l'image courante ou d'une image future vers l'image courante (respectivement "forward vectors" et "backward vectors" en terminologie anglo-saxonne).... Par la suite, pour la clarté des explications, exemple sera pris sur des vecteurs d'une image précédente vers l'image courante. Bien entendu, l'invention n'est pas limitée à l'exemple de réalisation présenté.

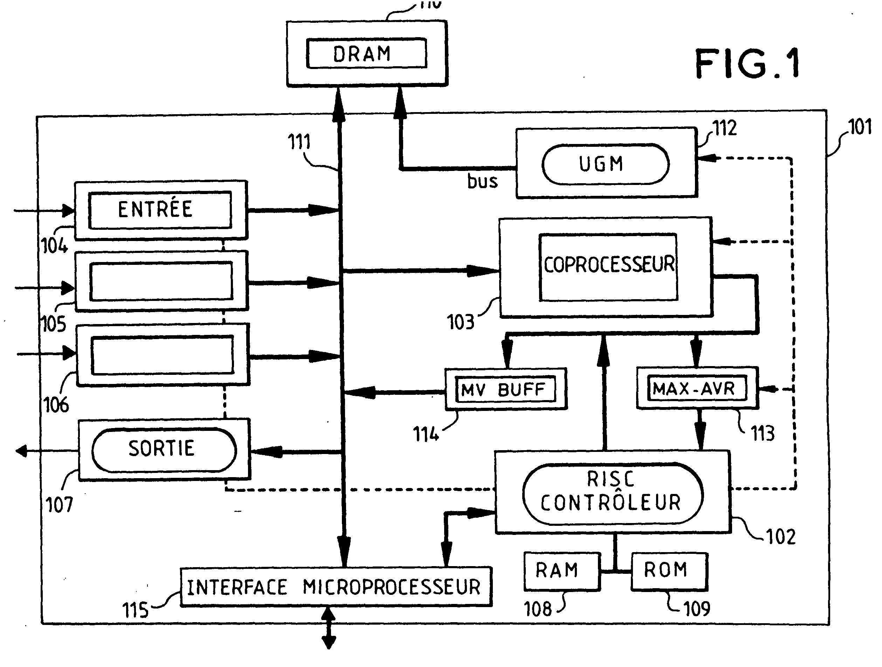

La figure 1 illustre de manière fonctionnellle un processeur d'estimation de mouvement 101. Le processeur 101 comprend un contrôleur RISC 102 (RISC signifiant:"Reduced Instruction Set Computer"), un coprocesseur à réseau systolique 103, trois ports d'entrée indépendants 104, 105, 106 pour charger les images, un port de sortie 107 pour fournir les vecteurs mouvement, ainsi qu'une RAM et une ROM locales (référencées respectivement par 108 et 109).

La présence de plusieurs port d'entrée indépendants permet de travailler sur autant de source vidéo indépendantes. Selon une variante de réalisation, chaque port d'entrée est muni d'un circuit de sous-échantillonnage pour la mise en oeuvre d'une estimation de mouvement hiérarchisée.

Les différents sous-ensembles mentionnés communiquent à travers un bus de données 111 qui est entre autres connecté à une mémoire externe DRAM 110. Une unité de gestion de mémoire 112 règle la circulation des données entre les mémoires locales. Les données correspondant aux images (de référence ou courantes) sont acheminées vers la mémoire dynamique 110. Elles sont ensuite relues pour être soumises en temps utile au coprocesseur 103. Les vecteur mouvement calculés par le coprocesseur 103 sont renvoyés vers la mémoire dynamique 110 à travers une mémoire tampon MV BUFF 114. Au moment opportun, ces vecteurs sont relus et transmis par l'intermédiaire du port de sortie 107.

Le processeur 101 est également muni d'une interface microprocesseur 115 destiné à la programmation et la configuration du contrôleur RISC 102, par téléchargement de code et de paramètres de calcul. Les vecteurs mouvement stockés dans la mémoire dynamique 110 sont également accessibles à travers l'interface 115.

Une unité MAX-AVR 113 calcule le vecteur mouvement moyen et le vecteur mouvement maximal pour chaque image.

Le contrôleur RISC 102 est, selon le présent exemple, un processeur à 19 bits comportant 62 registres et une mémoire de données de 64 mots. Le contrôleur 102 a pour rôle de gérer les requêtes des différentes unités du processeur 101 et de les activer en temps utile.

Le contrôleur RISC 102 est connecté à la RAM locale 108 et à la ROM locale 109, cette dernière contenant des routines couramment utilisées.

Par la suite, nous décrirons tout d'abord le fonctionnement d'un réseau systolique unique. Ceci permettra de mieux comprendre le fonctionnement du coprocesseur 103 qui associe 108 de ces réseaux.

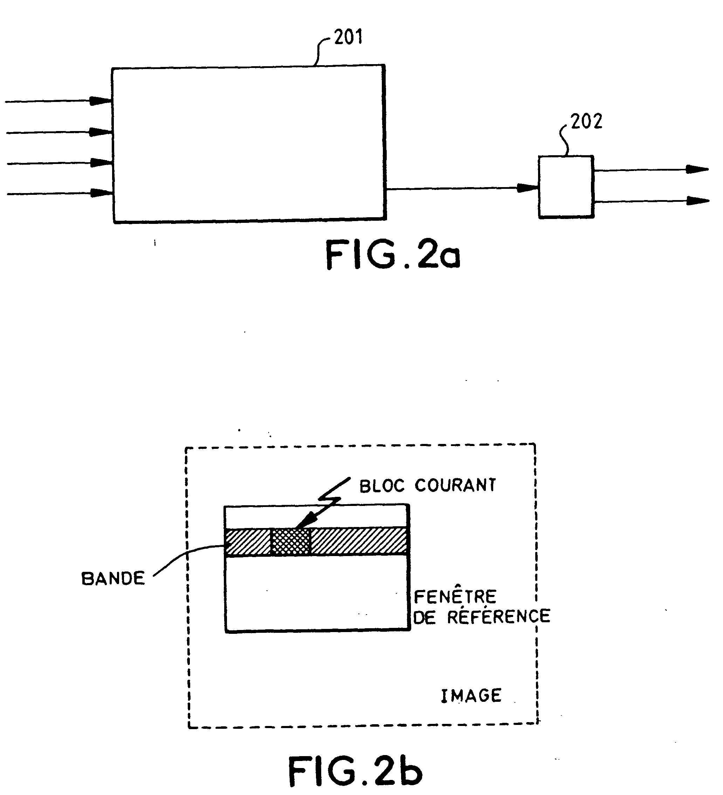

La figure 2a illustre la circulation de l'information dans le réseau systolique. La fonction de base du réseau est de comparer un bloc de pixels courant au contenu d'une fenêtre de référence. Le bloc courant est stocké dans le réseau systolique 201. La fenêtre de référence est acheminée par bandes vers le réseau. Pour chaque position possible, la fonction d'erreur Err est calculée. Un élément 202 détermine la plus petite valeur de la fonction d'erreur et le vecteur mouvement correspondant.

La figure 2b illustre la méthode de détermination des bandes à fournir au réseau systolique. Chaque bande a un nombre de lignes de pixels qui correspond au nombre de lignes du réseau (4 suivant le présent exemple). La première bande contient les quatre premières lignes de la fenêtre de référence. Lorsque la première bande a été totalement traîtée, le traîtement est poursuivi avec la bande suivante, qui contient les trois dernières lignes de la première bande, ainsi que la ligne immédiatement consécutive à cette première bande. Chaque bande est donc décalée d'une ligne par rapport à la bande précédente.

Chaque bande est fournie au réseau systolique colonne par colonne. Le bloc courant, ayant le même nombre de lignes que chaque bande, est ainsi comparé à tous les blocs de même taille de chaque bande. Finalement, le bloc courant aura été comparé à tous les blocs de même taille de la fenêtre de référence.

On notera que deux bandes diffèrent seulement d'une ligne de pixels. Cette redondance sera mise à profit plus loin pour limiter le chragement des données à partir de la mémoire 10.

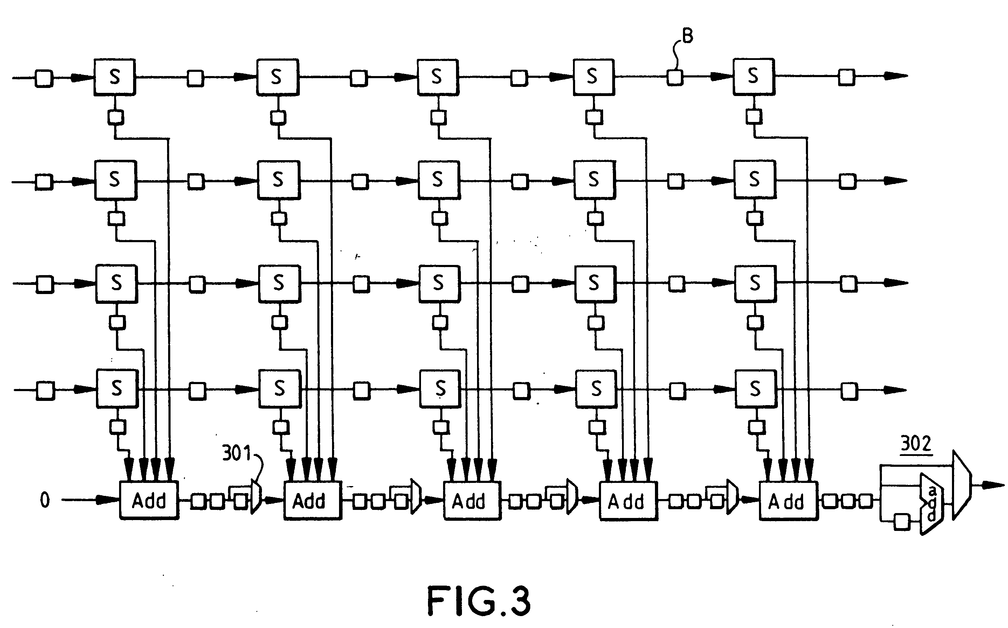

La figure 3 illustre un réseau systolique de quatre lignes et de cinq colonnes. Ce réseau comprend des cellules dites "S", des buffers "B", des additionneurs "Add", des cellules de dérivation 301 et une cellule de dérivation finale 302.

Les cellules S exécutent le calcul |a-b|, où a et b sont respectivement les valeurs d'un pixel du bloc courant et d'un pixel de la fenêtre de référence. La sortie de chaque cellule S d'une même ligne est reliée par un buffer B à l'entrée de la cellule S suivante. Un buffer B est également présent devant chaque première cellule S d'une ligne. Les valeurs de pixels b se propagent d'un buffer à un buffer suivant sur une même ligne à chaque cycle. Les buffers maintiennent les valeurs b pendant que les cellules S effectuent leurs calculs.

Chaque cellule S possède aussi une sortie C, qui fournit le résultat de l'opération |a-b|. Les sorties C sont également connectées à des buffers B. Tous les buffers B d'une même colonne sont reliés à un même additionneur Add. Il y a donc autant d'additionneurs que de colonnes.

La sortie d'un additionneur est reliée à l'entrée de l'additionneur suivant par trois buffers B en série. Suivant le mode de fonctionnement choisi, le dernier de ces trois buffers est ou non court-circuité par une cellule de dérivation 301.

La cellule de dérivation finale fournit soit une valeur de la fonction d'erreur à chaque cycle en fonctionnement normal non-entrelacé, soit une valeur de la fonction d'erreur tous les deux cycles en mode entrelacé. Dans ce dernier cas, l'additionneur intégré dans cette cellule de dérivation finale 302 additionne deux valeurs consécutives de la fonction d'erreur.

Selon une variante de réalisation, les additionneurs Add sont réalisés à l'aide d'additionneurs à trois entrées à sauvegarde de retenue ("Three input carry save adders")

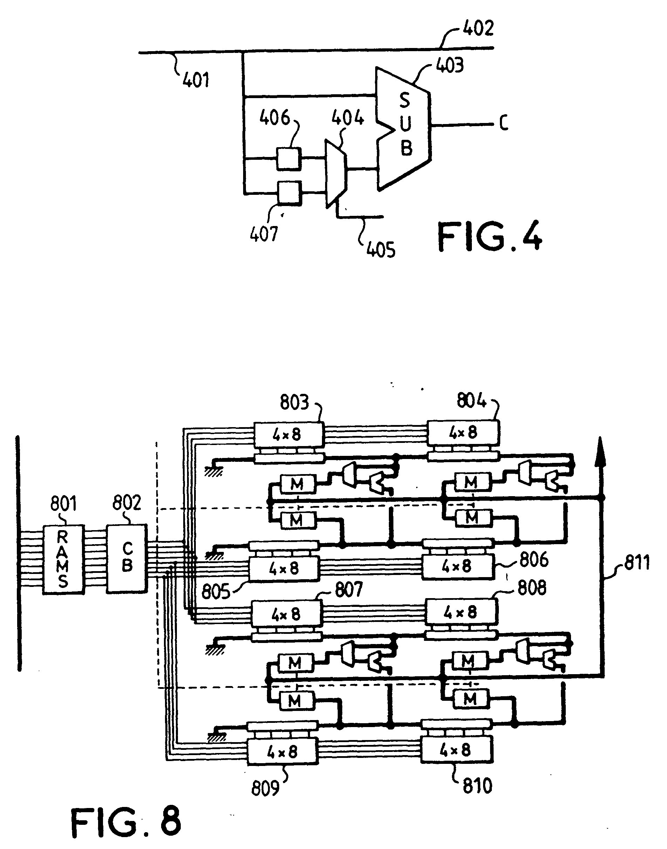

La figure 4 représente plus en détail les fonctions d'une cellule S. La cellule S comprend une entrée 401, une sortie 402 reliée directement à l'entrée 401, une unité de calcul 403 possédant deux entrées dont l'une est reliée à l'entrée 401 et l'autre à la sortie d'un multiplexeur 404 permettant de sélectionner par l'intermédiaire d'un ligne de sélection 405 soit le contenu d'un buffer 406, soit le contenu d'un buffer 407. Les entrées des buffers 406 et 407 sont également reliées à l'entrée 401 de la cellule.

Chacun des deux buffers contient une valeur de pixel d'un bloc courant. Ces valeurs sont chargées à travers l'entrée 401 au moment opportun. Les circuits de commande des buffers sont classiques et ne seront pas illustrés plus en détail. La présence en parallèle de deux buffers permet antre autres de stocker en même temps deux blocs courants dans un seul réseau systolique. Ainsi, deux comparaisons pourront être effectuées pour une même position dans la fenêtre de référence. On réduit ainsi la quantité de données transitant entre la mémoire dynamique 10 et le coprocesseur 3.

La présence de deux buffers dans chaque cellule S permet d'autre part un fonctionnement dit entrelacé qui permet de doubler le nombre de lignes du bloc courant par rapport au nombre de lignes du réseau systolique. Ce fonctionnement sera abordé plus loin.

L'unité de calcul fournit la valeur absolue de la différence des deux valeurs présentes à ses entrées.

On notera que dans le cadre de cet exemple, les valeurs b des pixels de la fenêtre de référence sont stockées dans les buffers B entre les cellules S, tandis que les valeurs a des pixels du ou des blocs courants sont stockées dans les buffers des cellules S.

On notera également que les fonctions d'accumulation des résultats intermédiaires produits par les cellules S est réalisé entièrement par les additionneurs en bas de chaque colonne de cellules S.

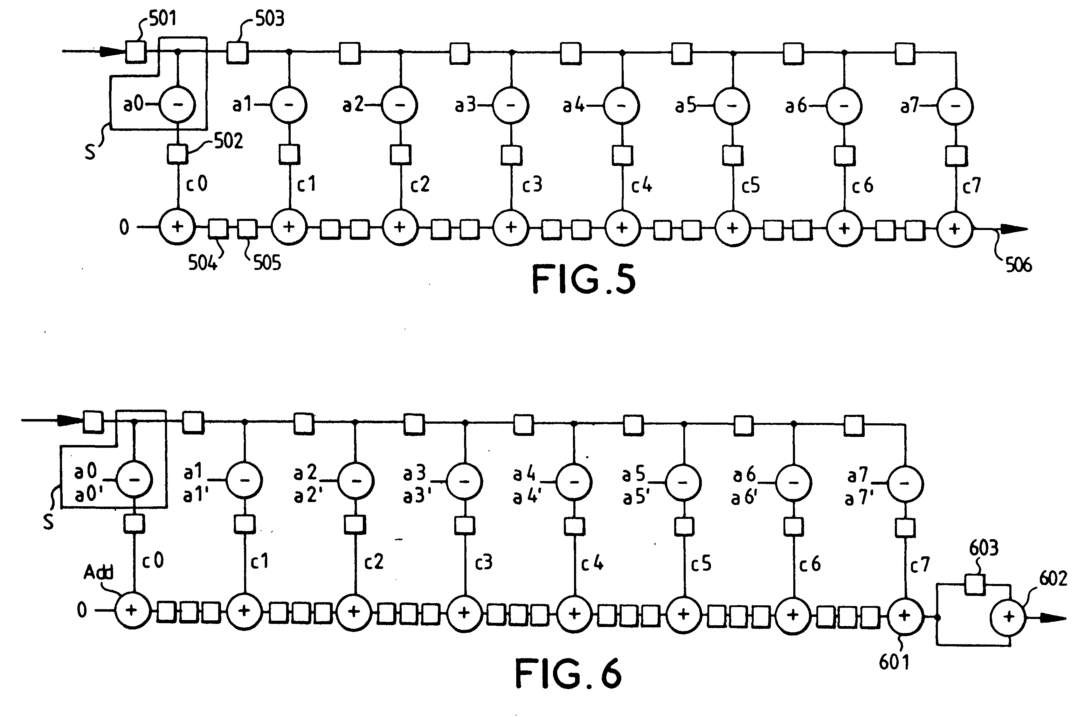

Le fonctionnement normal (non entrelacé) du réseau systolique sera expliqué à l'aide du schéma de la figure 5. Ce schéma représente un réseau systolique comprenant une seule ligne et huit colonnes. Le fonctionnement d'un réseau avec un plus grand nombre de lignes est tout à fait similaire, les résultats en sortie de chaque cellule S (sortie S) se présentant au même moment aux additionneurs. Dans le cadre du fonctionnement normal, seulement deux buffers B sont nécessaires entre chaque additionneur en bout de colonne. Pour la clarté du schéma, le troisième buffer et la cellule de dérivation ne sont pas illustrés.

Les valeurs de pixel a sont déjà mémorisées dans le réseau. Une valeur b est présentée à l'entrée du réseau à chaque cycle. Le tableau 1 représente l'évolution des sorties C sur un certain nombre de cycles.

Tableau 1

| Cycle | C0 | C1 | C2 | C3 | C4 | C5 | C6 | C7 |
|---|---|---|---|---|---|---|---|---|
| 0 | --- | --- | --- | --- | --- | --- | --- | --- |
| 1 | **\|b0-a0\|** | --- | --- | --- | --- | --- | --- | --- |
| 2 | \|b1-a0\| | \|b0-a1\| | --- | --- | --- | --- | --- | --- |
| 3 | \|b2-a0 1 | **\|b1-a1\|** | \|b0-a2\| | --- | --- | --- | --- | --- |
| 4 | \|b3-a0\| | \|b2-a1\| | \|b1-a2\| | \|b0-a3\| | --- | --- | --- | --- |
| 5 | \|b4-a01 | \|b3-a1\| | **\|b2-a2\|** | \|b1-a3\| | \|b0-a4\| | --- | --- | --- |
| 6 | \|b5-a0\| | \|b4-a1\| | \|b3-a2 \| | \|b2-a3 \| | \|b1-a4\| | \|b0-a5\| | --- | --- |
| 7 | \|b6-a0\| | \|b5-a1\| | \|b4-a2\| | **\|b3-a3\|** | \|b2-a4\| | \|b1-a5\| | \|b0-a6\| | --- |
| 8 | \|b7-a01 | \|b6-a1\| | \|b5-a2 \| | \|b4-a3 \| | \|b3-a4\| | \|b2-a5\| | \|b1-a6\| | \|b0-a7\| |
| 9 | \|b8-a01 | \|b7-a1\| | \|b6-a2 \| | \|b5-a3 \| | **\|b4-a4\|** | \|b3-a5 \| | \|b2-a6 \| | \|b1-a7\| |
| 10 | \|b9-a01 | \|b8-a1\| | \|b7-a2 \| | \|b6-a3 \| | \|b5-a4\| | \|b4-a5\| | \|b3-a6\| | \|b2-a7\| |
| 11 | \|b10-a01 | \|b9-a1\| | \|b8-a2\| | \|b7-a3 \| | \|b6-a4\| | **\|b5-a5\|** | \|b4-a6\| | \|b3-a7 \| |
| 12 | \|b11-a0\| | \|b10-a1\| | \|b9-a2\| | \|b8-a3\| | \|b7-a4\| | \|b6-a5\| | \|b5-a6\| | \|b4-a7\| |
| 13 | \|b12-a0\| | \|b11-a1\| | \|b10-a2\| | 1 b9-a3\| | \|b8-a4\| | \|b7-a5\| | **\|b6-a6\|** | \|b5-a7 \| |
| 14 | \|b13-a0\| | \|b12-a1\| | \|b11-a2\| | \|b10-a3\| | \|b9-a4\| | \|b8-a5\| | \|b7-a6\| | \|b6-a7\| |
| 15 | \|b14-a01 | \|b13-a1\| | \|b12-a2\| | \|b11-a3\| | \|b10-a4\| | \|b9-a5\| | \|b8-a6\| | **\|b7-a7\|** |

Pendant le cycle 0, la valeur b0 est mémorisée dans le premier buffer B (référence 501) en entrée du réseau. Ce n'est qu'au cycle 1 que le résultat fourni par la première cellule S est mémorisé dans le buffer 502 en sortie C0. Pendant le cycle 1, la valeur b0 est également mémorisée par le second buffer B 503.

A un moment donné du fonctionnement du réseau, on devra retrouver à la sortie du dernier additionneur la somme de toutes valeurs absolues des différences correspondant une position donnée du bloc courant (en l'occurrence une ligne de 8 pixels) dans la fenêtre de référence. Les résultats qui doivent s'ajouter au niveau de additionneurs pour la première ligne de la fenêtre de référence sont indiqués en gras dans le tableau.

Cette fonction d'accumulation conditionne le retard introduit par les buffers 504 entre les additionneurs. On voit facilement que l'on doit introduire un retard de deux cycles pour que la propagation des résultats au niveau des additionneurs se fasse de manière adéquate. Ceci explique la présence de deux buffers entre chaque additionneur. Chaque buffer introduit un retard d'un cycle. Dit d'une autre façon, les deux buffers 504 et 505 entre les deux premiers additionneur annulent le retard introduit par les buffers 501 et 502.

Au bout du quinzième cycle, la valeur de la fonction Err pour la première position possible du bloc courant est présente à la sortie 506 du réseau.

On notera que lors de ce fonctionnement, seul une des deux valeurs a mémorisée dans chaque cellule S est utilisée. Selon une variante de réalisation, un seul buffer de mémorisation des valeurs de pixel du bloc courant est utilisé dans chaque cellule S.

La figure 6 et le tableau 7 illustrent le fonctionnement d'un réseau systolique en mode dit entrelacé. Ce mode permet de déterminer des fonctions d'erreur pour des blocs courants comportant un nombre de lignes égal au double du nombre de lignes du réseau systolique. Ceci est réalisé simplement en ajoutant un buffer supplémentaire dans chaque cellule S ainsi qu'un buffer supplémentaire entre chaque additionneur.

La figure 6 est similaire à la figure 5, en dehors du fait qu'un buffer supplémentaire est inséré entre chaque paire d'additionneurs. D'autre part, chaque cellule S comporte les deux buffers internes illustrés à la figure 4. Pendant les cycles pairs, le contenu du premier buffer de chaque cellule S est multiplexé vers l'unité de calcul correspondante, tandis que le contenu du second buffer est utilisé lors des cycles impairs.

Le bloc courant de taille double est séparé en deux sous-blocs a et a' superposés verticalement. Le premier sous-bloc a est stocké dans les premiers buffers de chaque cellule S, tandis que le second sous-bloc a' est stocké dans les seconds buffers de chaque cellule S.

La bande de la fenêtre de référence possède de manière identique un nombre de lignes doublé. Elle comprend une sous-bande supérieure b et une sous-bande inférieure b'. Pendant un cycle pair, une colonne de la sous-bande b est présentée à l'entrée du réseau systolique, tandis qu'une colonne de b' est présentée pendant les cycles impairs.

Le tableau 2 donne l'état des sorties c après chaque cycle. De même que précédemment, les caractères gras indiquent les résultats intermédiaires qui devront s'additionner pour former une fonction d'erreur correspondant à un sous-bloc.

L'alternance entre les deux sous-blocs et les deux sous-bandes introduit, par rapport à un fonctionnement non-entrelacé, un délai supplémentaire d'un cycle entre la présence à la sortie d'un additionneur de l'erreur cumulée correspondant à une position donnée et la présence du résultat intermédiaire correspondant à l'entrée de l'additionneur suivant. Pour cette raison, un troisième buffer est inséré entre chaque paire d'additionneurs.

Le dernier additionneur 601 du réseau de la figure 6 est relié d'une part à une première entrée d'un additionneur 602, d'autre part à un buffer 603 dont la sortie est reliée à la deuxième entrée de l'additionneur 602.

La fonction d'erreur correspondant à un sous-bloc est fournie à la sortie de l'additionneur 601 à chaque cycle (une fois le réseau correctement initialisé). Le tableau 2 montre que la valeur fonction d'erreur correspondant au sous-bloc a' est en retard d'un cycle sur celle correspondant au sous-bloc a. Il faut additionner les deux valeurs pour obtenir la valeur de la fonction d'erreur correspondant au bloc entier a+a'. Pendant un premier cycle, la valeur correspondant à a est mémorisée dans le buffer 603. Au cycle suivant, la valeur correspondant au bloc a' est présente en sortie de l'additionneur 601. L'additionneur 602 effectue la somme. Un résultat valide est donc présent à la sortie de l'additionneur 602 tous les deux cycles.

Ce fonctionnement en mode dit entrelacé est très interessant car il permet de réduire le nombre de lignes du réseau, ainsi que le nombre de mémoires locales (voir plus loin).

Selon une variante de réalisation, le réseau systolique est conçu pour traîter des blocs courants possédant un nombre de lignes égal à N fois le nombre de lignes du réseau, où N est un entier supérieur à 2.

Tableau 2

| Cycle | C0 | C1 | C2 | C3 | C4 | C5 | C6 | C7 |
|---|---|---|---|---|---|---|---|---|
| 0 | --- | --- | --- | --- | --- | --- | --- | --- |
| 1 | **\|b0-a0\|** | --- | --- | --- | --- | --- | --- | --- |
| 2 | \|b0'-a0'\| | \|b0-a1\| | --- | --- | --- | --- | --- | --- |
| 3 | \|b1-a0\| | \|b0'-a1'\| | \|b0-a2\| | --- | --- | --- | --- | --- |
| 4 | \|b1'-a0'\| | **\|b1-a1\|** | \|b0'-a2'\| | \|b0-a3\| | --- | --- | --- | --- |
| 5 | \|b2-a0\| | \|b1'-a1'\| | \|b1-a2\| | \|b0'-a3'\| | \|b0-a4\| | --- | --- | --- |
| 6 | \|b2'-a0'\| | \|b2-a1\| | \|b1'-a2'\| | \|b1-a3\| | \|b0'-a4'\| | \|b0-a5\| | --- | --- |
| 7 | \|b3-a0\| | \|b2'-a1'\| | **\|b2-a2\|** | \|b1'-a3'\| | \|b1-a4\| | \|b0'-a5'\| | \|b0-a6\| | --- |
| 8 | \|b3'-a0'\| | \|b3-a1\| | \|b2'-a2'\| | \|b2-a3\| | \|b1'-a4'\| | \|b1-a5\| | \|b0'-a6'\| | \|b0-a7\| |
| 9 | \|b4-a0\| | \|b3'-a1'\| | \|b3-a2\| | \|b2'-a3'\| | \|b2-a4\| | \|b1'-a5'\| | \|b1-a6\| | \|b0'-a7'\| |
| 10 | \|b4'-a0'\| | \|b4-a1\| | \|b3'-a2'\| | **\|b3-a3\|** | \|b2'-a4'\| | \|b2-a5\| | \|b1'-a6'\| | \|b1-a7\| |
| 11 | \|b5-a0\| | \|b4'-a1'\| | \|b4-a2\| | \|b3'-a3'\| | \|b3-a4\| | \|b2'-a5'\| | \|b2-a6\| | \|b1'-a7'\| |
| 12 | \|b5'-a0'\| | \|b5-a1\| | \|b4'-a2'\| | \|b4-a3\| | \|b3'-a4'\| | \|b3-a5\| | \|b2'-a6'\| | \|b2-a7\| |
| 13 | \|b6-a0\| | \|b5'-a1'\| | \|b5-a2\| | \|b4'-a3'\| | **\|b4-a4\|** | \|b3'-a5'\| | \|b3-a6\| | \|b2'-a7'\| |
| 14 | \|b6'-a0'\| | \|b6-a1\| | \|b5'-a2'\| | \|b5-a3\| | \|b4'-a4'\| | \|b4-a5\| | \|b3'-a6'\| | \|b3-a7\| |
| 15 | \|b7-a0\| | \|b6'-a1'\| | \|b6-a2\| | \|b5'-a3'\| | \|b5-a4\| | \|b4'-a5'\| | \|b4-a6\| | \|b3'-a7'\| |
| 16 | \|b7'-a0'\| | \|b7-a1\| | \|b6'-a2'\| | \|b6-a3\| | \|b5'-a4'\| | **\|b5-a5\|** | \|b4'-a6'\| | \|b4-a7\| |

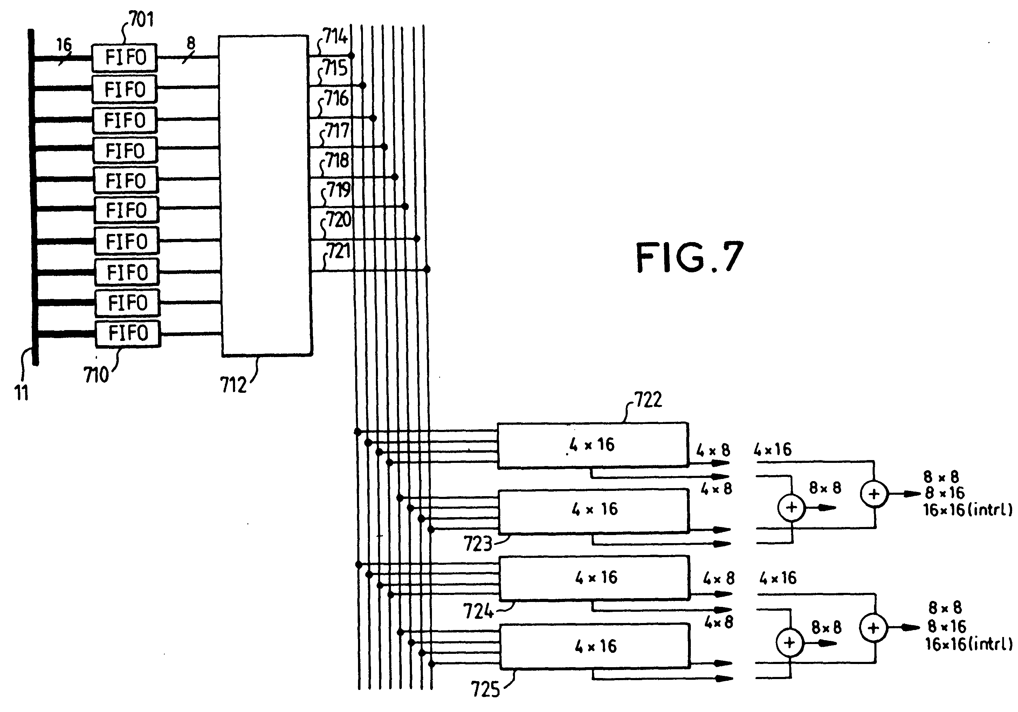

La figure 7 représente schématiquement le coprocesseur suivant une première variante de l'exemple de réalisation. Selon cette variante, le coprocesseur comprend dix piles premier entré premier sorti (piles FIFO) 701 à 710, reliées en parallèle sur le bus de données 11. Le nombre de mots de données par FIFO détermine le nombre de colonnes de pixels de la fenêtre de recherche. Les sorties des piles 701 à 710 sont reliées à un circuit de commutation 712 possédant dix entrées et huit sorties 714 à 721.

Le circuit 712 permet de connecter la sortie de n'importe laquelle des dix FIFOs sur n'importe laquelle des huit sorties du circuit. Chaque FIFO contient une ligne entière de la fenêtre de recherche. Les huit FIFOs connectées à une sortie à un moment donné correspondent aux lignes de la bande de la fenêtre de recherche traitée.

Les deux FIFOs supplémentaires non connectées sont chargées par l'intermédiaire du bus de données à partir des données stockées dans la mémoire 10. Les données chargées correspondent aux lignes de la fenêtre de recherche qui diffèrent par rapport aux bandes en cours de traîtement.

Supposons par exemple que la première bande de huit lignes L1 à L8 d'une fenêtre de recherche est contenue dans les FIFOs 701 à 708. Pendant le traîtement de ces huit lignes, la ligne L9 est chargée dans la FIFO 709. Lorsque le traîtement de la première bande est terminé, la ligne L1 stockée dans la FIFO 701 devient inutile. La seconde bande contient en effet les lignes L2 à L9. Le traîtement de cette seconde bande peut donc commencer sans temps mort, puisque la bande complète est présente dans les FIFOs. Le circuit de commutation aura pour charge de rétablir le bon ordre des lignes mémorisées avant présentation aux réseaux systoliques 722 à 725.

Dans le cas où les bandes ont huit lignes, neuf FIFOs sont suffisantes pour le fonctionnement décrit. La dixième FIFO est utilisée par exemple lorsqu'on traîte deux bandes de quatre lignes en parallèle.

Selon la présente variante, quatre réseaux systoliques 722 à 725 de quatre lignes et de seize colonnes chacun sont connectés aux sorties du circuit de commutation. Par convention, on dira que la sortie 714 représente la ligne supérieure d'une bande de huit lignes, tandis que la sortie 721 représente la ligne inférieure. Les premier et troisième réseaux (respectivement 722 et 724) sont connectés aux quatre sorties supérieures 714 à 717, tandis que les second et quatrième réseaux (respectivement 723 et 725) sont connectés aux quatre sorties inférieures 718 à 721.

La disposition ci-dessus permet de traîter de façon flexible des blocs courants de tailles différentes. On peut en effet considérer les quatre réseaux de différentes manières:

Huit réseaux de 4*8 éléments, chaque réseau de 4*16 éléments traîtant deux blocs courants de 4*8 éléments;
   Quatre réseaux de 8*8 éléments;
   Deux réseaux de 8*16 éléments;
   Deux réseaux de 16*16 éléments.

Dans ce dernier cas, les réseaux travaillent en mode entrelacé, seulement huit sorties étant disponibles et non seize. Les huit sorties fourniront alternativement des colonnes de huit pixels d'une bande supérieure et d'une bande inférieure de la fenêtre de référence.

Il est bien sûr envisageable d'utiliser seize FIFOs au lieu de huit (sans compter les FIFOs nécessaires au chargement de la ligne suivante).

Comme il a été dit précédemment, la profondeur des FIFOs détermine la largeur de la fenêtre de référence. Dans le cas où l'on travaille avec des réseaux de 4*8 éléments, il est possible de grouper les FIFOs par deux et de stocker dans chaque paire de FIFOs l'équivalent d'une ligne de pixels de longueur double.

La figure 7 indique d'autre part sous la forme de flèches la façon de grouper les résultats de calcul à la sortie de chaque réseau de 4*16 éléments suivant le mode de fonctionnement.

La figure 8 illustre une seconde variante de l'exemple de réalisation. Neuf FIFOs (regroupés sous la référence 801) alimentent un circuit de commutation 802. Le coprocesseur suivant le présent exemple comporte huit réseaux systoliques 803 à 810 de 4*8 éléments. En fait, deux réseaux 4*8 en cascade de la figure 8 équivalent à un réseau 4*16 de la figure 7. La figure 8 permet de mieux illustrer le cheminement des résultats de calcul de chacun des réseaux lorsque huit blocs courants de 4*8 sont traîtés en parallèle. Exemple sera pris sur les deux réseaux supérieurs 803 et 804. Le résultat final (c'est à dire la valeur de la fonction d'erreur) à la sortie du réseau 803 est transmis directement au réseau 804. Suivant que l'on travaille avec huit blocs courants de 4*8 ou quatre blocs courants de 8*8, ce résultat à la sortie du réseau 803 doit ou non être disponible pour un traîtement ultérieur. Dans le cas où l'on travaille avec 8 blocs courants de 4*8 pixels, ce résultat sera nécessaire pour la détermination du vecteur mouvement du bloc courant traîté par le réseau 803.

Selon la présente variante de réalisation, une cellule M est associée à chaque réseau de 4*8 éléments. Chaque cellule M détermine la valeur minimale de la fonction d'erreur en sortie d'un des réseaux, et garde en mémoire les coordonnées du vecteur mouvement correspondant. Les résultats sont communiqués à travers un bus de données spécifique 811.

Les sorties des réseaux 803, 804, 807 et 808 sont connectés chacun à l'entrée d'un multiplexeur à deux entrées, dont la sortie est connectée à l'entrée de la cellule M associée. La sortie de chacun des mêmes réseaux est aussi connectée à l'entrée d'un additionneur à deux entrées qui reçoit sur son autre entrée la sortie du réseau immédiatement inférieur. Pour les réseaux 803, 804, 807 et 808, il s'agit respectivement des sorties des réseaux 805, 806, 809 et 810.

Lorsque le processeur travaille sur huit blocs courants, la sortie de chaque réseau est directement reliée à la cellule M associée. Chaque cellule M détermine alors de façon autonome la valeur minimale de la fonction d'erreur et le vecteur mouvement. Il en résulte huit vecteurs distincts.

Lorsque le processeur travaille sur quatre blocs de 8*8 pixels, les multiplexeurs commutent pour que l'une des cellules M associées avec deux réseaux superposés travaillant sur le même bloc reçoive la somme des valeurs des fonctions d'erreur calculées par ces deux réseaux. Seul le vecteur déterminé par la cellule recevant cette somme sera pris en compte ultérieurement.

La commutation des multiplexeurs est commandée par le contrôleur 2 de la figure 1.

**Revendications**

1. Dispositif d'estimation de mouvement par comparaison de blocs dans un système de compression d'images à base de blocs comprenant:

   N lignes de M colonnes de moyens de calcul (S, 403) d'une fonction d'erreur (Err) entre deux valeurs,
   des premiers moyens de mémorisation (S, 406) pour mémoriser des valeurs (a) représentant un bloc dont le mouvement est à estimer,
   des seconds moyens de mémorisation (B) pour mémoriser des valeurs (b) de fenêtre de référence,
   les premiers et seconds moyens de mémorisation étant disposés de façon
   à présenter chacun respectivement une valeur mémorisée à chaque moyen de calcul (S, 406);
   des moyens d'accumulation (Add) pour accumuler les valeurs de la fonction d'erreur;

   **caractérisé en ce que** les premiers moyens de mémorisation (S) de valeurs représentant le bloc dont le mouvement est à estimer comportent des mémoires pour mémoriser deux valeurs de pixels (406, 407), et un multiplexeur (404, 405) pour multiplexer une des valeurs vers les moyens de calcul de la fonction d'erreur (403).

2. Dispositif selon la revendication 1, **caractérisé en ce qu'**il comprend N lignes de M colonnes de moyens de calcul (S, 403), N lignes de M colonnes des premiers moyens de mémorisation (406, 407), N lignes de M colonnes des seconds moyens de mémorisation (B) et M moyens d'accumulation (Add) en série pour accumuler les valeurs de la fonction d'erreur pour une colonne de N moyens de calcul, la sortie d'un moyen d'accumulation étant reliée à l'entrée du moyen d'accumulation suivant de façon à introduire un retard fonction de la propagation du bloc de la fenêtre de référence dans le réseau formé par lesdits moyens de mémorisation.

3. Dispositif selon la revendication 2, **caractérisé en ce qu'**il comprend N lignes de M seconds moyens de mémorisation (B) reliés en série dans chaque ligne, pour propager une bande de la fenêtre de référence colonne par colonne dans le réseau ainsi formé.

4. Dispositif selon la revendication 3, **caractérisé en ce que** la sortie de chaque second moyen de mémorisation (B) est reliée à l'entrée d'un moyen de calcul de la fonction d'erreur (S, 403).

5. Dispositif selon la revendication 4, **caractérisé en ce que** chaque moyen de calcul (S, 403) calcule une fonction d'erreur à partir de la valeur (b) en sortie du second moyen de mémorisation auquel le moyen de calcul est relié (B) et d'une valeur (a) représentant le bloc dont le mouvement est à estimer.

6. Dispositif selon la revendication 5, **caractérisé en ce que** le résultat du calcul de chacun des moyens de calcul (S, 403) est mémorisé dans un buffer respectif.

7. Dispositif selon l'une des revendications précédentes, **caractérisé en ce que** les deux valeurs (406, 407) représentent respectivement deux sous-blocs inférieur et supérieur d'un même bloc, les valeurs fournies au réseau de seconds moyens de mémorisation étant alternativement des valeurs représentant une sous-bande supérieure et une sous-bande inférieure de la fenêtre de référence, ce fonctionnement étant dit fonctionnement en mode entrelacé.

8. Dispositif selon la revendication 7, **caractérisé en que** ledit dispositif comporte des moyens d'addition (302) des valeurs cumulées de la fonction d'erreur correspondant à ces deux sous-blocs.

9. Dispositif selon l'une des revendications 7 ou 8, **caractérisé en ce que** lors du mode entrelacé, un retard supplémentaire d'un cycle de calcul est introduit entre les additionneurs (Add).

10. Dispositif selon l'une des revendications 1 à 6, **caractérisé en ce que** les deux valeurs (406, 407) représentent respectivement des blocs différents, les valeurs fournies au réseau de seconds moyens de mémorisation étant alternativement des valeurs représentant une bande de référence relative au premier bloc et au second bloc.

11. Dispositif selon l'une des revendications 2 à 10, **caractérisé en ce que** chaque ligne de buffers est alimentée par des moyens de mémorisation (701 à 710, 801) d'une ligne de la fenêtre de référence.

12. Dispositif selon la revendication 11, **caractérisé en que** lesdits moyens de mémorisation (701 à 710, 801) sont des piles premier entré premier sorti.

13. Dispositif selon l'une des revendications 11 ou 12, **caractérisé en ce qu'**il y a au moins N+1 moyens de mémorisation (701 à 710, 801) de lignes, et que lorsque N desdits au moins N+1 moyens de mémorisation alimentent les N lignes seconds moyens de mémorisation, les moyens de mémorisation de ligne autres que lesdits N moyens de mémorisation sont chargés avec des valeurs correspondant aux lignes qui diffèrent entre la bande de la fenêtre de référence mémorisée dans lesdits N moyens de mémorisation de lignes et la bande dont le traitement est immédiatement consécutif.

14. Dispositif selon l'une des revendications 11 à 13, **caractérisé en qu'**il comprend un circuit de commutation (712) entre les moyens de mémorisation de lignes (701 à 710, 801) et le réseau de seconds moyens de mémorisation, lesdits moyens de commutation reliant les moyens de mémorisation de lignes aux lignes appropriées des seconds moyens de mémorisation.

15. Système de compression d'images, **caractérisé en ce qu'**il comprend un dispositif selon l'une quelconque des revendications précédentes.

16. Dispositif d'estimation de mouvement par comparaison de blocs dans un système de compression d'images à base de blocs comprenant une matrice de cellules, chaque cellule comportant:

des moyens de calcul (S, 403) d'une fonction d'erreur entre une valeur de bloc et une valeur de fenêtre de référence;

**caractérisé en ce que** chaque cellule comporte en outre des moyens de mémorisation (406, 407) pour mémoriser une pluralité de valeurs représentatives d'au moins un bloc dont le mouvement est à estimer; un multiplexeur (404, 405) connecté aux moyens de mémorisation pour multiplexer l'une de la pluralité de valeurs vers les moyens de calcul.

**Claims**

1. Device for estimation of movement by block matching in an image compression system based on pixel blocks, said device comprising:

N lines of M columns of means of calculation (S) of an error function (Err) between two values,

first means of memorization (S, 406) adapted to store values (a) representing a block of pixels whose movement is to be estimated,

second means of memorization (B) for propagating reference window values (b),

the first and second means for memorization being arranged so as to respectively present a stored value to each means of calculation (S, 406);

accumulation means (Add) for accumulating the error function values;

**characterized in that** the first means of memorization (S) of values representing the block whose movement is to be estimated comprise memories for memorizing two pixel values (406, 407), and a multiplexer (404, 405) for multiplexing one of the values to the calculation means of the error function (403).

2. Device according to claim 1, **characterized in that** it comprises N lines of M columns of means of calculation (S, 403), N lines of M columns of first means of memorization (406, 407), N lines of M columns of second means of memorization (B) and M accumulation means in series for accumulating the error function values for a column of N calculation means, the output of an accumulation means being connected to the input of the following accumulation means in order to produce a delay function of the propagation of the block of the reference window in the network formed by the means of memorization.

3. Device according to claim 2, **characterized in that** it comprises N lines of M columns of second means (B) connected in series to propagate a band of values representing the reference window propagated column by column in the network thus formed.

4. Device according to claim 3, wherein the output of each second means of memorization (B) is connected to the input of a means (S, 403) of calculation of the error function.

5. Device according to claim 4, wherein each means of calculation (S, 403) calculates an error function from the value (b) at the output of the second means of memorization (B) to which the calculation means are connected and a value representing the block whose movement is to be estimated.

6. Device according to claim 5, wherein the result of the calculation of each of the means of calculation (S, 403) is memorized in a respective buffer.

7. Device according to one of the previous claims, **characterized in that** the two values (406, 407) represent respectively a lower and an upper sub-block of a same block, the values provided to the network of second means of memorization being alternatively values representing an upper sub-band and a lower sub-band of the reference window, this operating mode being called interlaced operating mode.

8. Device according to claim 7, wherein said device includes means of addition (302) of the cumulated values of the error function corresponding to these two sub-blocks.

9. Device according to claim 7 or 8, wherein in interlaced mode, a supplementary delay of one calculation cycle is introduced between the adders (Add).

10. Device according to one of the claims 1 to 6, **characterized in that** the two values (406, 407) representing respective different blocks, the values provided to the network of second means of memorization being alternatively values representing a reference band relative to the first block and to the second block.

11. Device according to one of claims 2 to 10, **characterized in that** each line of buffers is fed by means of memorization (701 to 710, 801) of a line of the reference window.

12. Device according to claim 11, **characterized in that** said means of memorization (701 to 710, 801) are first in first out queues.

13. Device according to one of the claims 11 or 12, **characterized by** at least N+1 means of memorization of lines (701 to 710, 801), and that when N of said at least N+1 means of memorization feed the N lines of second means of memorization, the means of memorization of lines other than said N means of memorization are loaded with values corresponding to lines differing between the band of the reference window stored in the N means of memorization of lines and the immediately consecutive band to be processed.

14. Device according to one of the claims 11 to 13, **characterized in that** it comprises a switching circuit (712) between the means of memorization of lines (701 to 710, 801) and the network of second means of memorization, said switching means connecting the means of memorization of lines to the appropriate lines of the second memorization means.

15. System of image compression, **characterized in that** it comprises a device according to one of the preceding claims.

16. A device for estimation of movement by block matching in a block based image compression system comprising a matrix of cells, each cell comprising:

calculation means (S, 403) of an error function of a value of a block and a value of a reference window;

**characterized in that** each cell further comprises means of memorization (406, 407) for storing a plurality of values representative of at least one block of which the movement is to be estimated;

a multiplexer (404, 405) connected to the means of memorization for multiplexing at least one of the plurality of values to the calculation means.

**Patentansprüche**

1. Vorrichtung zur Bewegungsschätzung durch Vergleich von Blöcken in einem Bildkompressionssystem auf der Basis von Blöcken, die aufweist:

   N Zeilen mit M Spalten von Mitteln (S, 403) zur Berechnung einer Fehlerfunktion (Err) zwischen zwei Werten; erste Speichermittel (S, 406), um Werte (a) zu speichern, die einen Block darstellen, dessen Bewegung zu schätzen ist; zweite Speichermittel (B), um Referenzfensterwerte (b) zu speichern;

   wobei die ersten und zweiten Speichermittel so angeordnet sind, dass sie an jedes Rechenmittel (S, 406) einen gespeicherten Wert anlegen; Kumulierungsmittel (Add), um die Werte der Fehlerfunktion zu kumulieren; **dadurch gekennzeichnet, dass** die ersten Speichermittel (S) von Werten, die den Block darstellen, dessen Bewegung zu schätzen ist, Speicher zum Speichern von zwei Pixelwerten (406, 407) und einen Multiplexer (404, 405) aufweisen, um einen der Werte zu den Mitteln zum Berechnen der Fehlerfunktion (403) zu multiplexieren.

2. Vorrichtung nach Anspruch 1, **dadurch gekennzeichnet, dass** sie N Zeilen mit M Spalten von Rechenmitteln (S, 403), N Zeilen mit M Spalten der ersten Speichermittel (406, 407), N Zeilen mit M Spalten der zweiten Speichermittel (B) und M Kumulierungsmittel (Add) in Reihe aufweist, um die Werte der Fehlerfunktion für eine Spalte von N Rechenmitteln zu kumulieren, wobei der Ausgang eines Kumulierungsmittels mit dem Eingang des folgenden Kumulierungsmittels verbunden ist, um eine von der Ausbreitung des Blocks des Referenzfensters im von den Speichermitteln gebildeten Array abhängende Verzögerung einzuführen.

3. Vorrichtung nach Anspruch 2, **dadurch gekennzeichnet, dass** sie N Zeilen mit M zweiten Speichermitteln (B) aufweist, die in jeder Zeile in Reihe verbunden sind, um einen Streifen des Referenzfensters Spalte für Spalte in das so geformte Array auszubreiten.

4. Vorrichtung nach Anspruch 3, **dadurch gekennzeichnet, dass** der Ausgang jedes zweiten Speichermittels (B) mit dem Eingang eines Mittels zur Berechnung der Fehlerfunktion (S, 403) verbunden ist.

5. Vorrichtung nach Anspruch 4, **dadurch gekennzeichnet, dass** jedes Rechenmittel (S, 403) eine Fehlerfunktion ausgehend von dem Wert (b) am Ausgang des zweiten Speichermittels, mit dem das Rechenmittel (B) verbunden ist, und von einem Wert (a) berechnet, der den Block darstellt, dessen Bewegung zu schätzen ist.

6. Vorrichtung nach Anspruch 5, **dadurch gekennzeichnet, dass** das Ergebnis der Berechnung jedes der Rechenmittel (S, 403) in einem jeweiligen Puffer gespeichert wird.

7. Vorrichtung nach einem der vorhergehenden Ansprüche, **dadurch gekennzeichnet, dass** die beiden Werte (406, 407) je zwei Unterblöcke, einen unteren und einen oberen, des gleichen Blocks darstellen, wobei die an das Array von zweiten Speichermitteln gelieferten Werte abwechselnd Werte sind, die einen oberen Unterstreifen und einen unteren Unterstreifen des Referenzfensters darstellen, wobei dieser Betrieb als Betrieb im Interlaced-Modus bezeichnet wird.

8. Vorrichtung nach Anspruch 7, **dadurch gekennzeichnet, dass** die Vorrichtung Mittel (302) zur Addition der kumulierten Werte der Fehlerfunktion aufweist, die diesen beiden Unterblöcken entsprechen.

9. Vorrichtung nach einem der Ansprüche 7 oder 8, **dadurch gekennzeichnet, dass** im Interlaced-Modus eine zusätzliche Verzögerung um einen Rechenzyklus zwischen den Addierern (Add) eingeführt wird.

10. Vorrichtung nach einem der Ansprüche 1 bis 6, **dadurch gekennzeichnet, dass** die beiden Werte (406, 407) unterschiedliche Blöcke darstellen, wobei die an das Array von zweiten Speichermitteln gelieferten Werte abwechselnd Werte sind, die einen den ersten Block bzw. den zweiten Block betreffenden Referenzstreifen darstellen.

11. Vorrichtung nach einem der Ansprüche 2 bis 10, **dadurch gekennzeichnet, dass** jede Zeile von Puffern von Speichermitteln (701 bsi 710, 801) einer Zeile des Referenzfensters gespeist wird.

12. Vorrichtung nach Anspruch 11, **dadurch gekennzeichnet, dass** die Speichermittel (701 bis 710, 801) FIFO-Stapel sind.

13. Vorrichtung nach einem der Ansprüche 11 oder 12, **dadurch gekennzeichnet, dass** es mindestens N+1 Zeilen-Speichermittel (701 bis 710, 801) gibt, und dass, wenn N der mindestens N+1 Speichermittel die N Zeilen der zweiten Speichermittel speisen, die anderen Zeilen-Speichermittel als die N Speichermittel mit Werten geladen werden, die den Zeilen entsprechen, die sich zwischen dem Streifen des in den N Zeilen-Speichermitteln gespeicherten Referenzfensters und dem Streifen unterscheiden, dessen Verarbeitung direkt danach folgt.

14. Vorrichtung nach einem der Ansprüche 11 bis 13, **dadurch gekennzeichnet, dass** sie einen Schaltkreis (712) zwischen den Zeilen-Speichermitteln (701 bis 710, 801) und dem Array von zweiten Speichermitteln aufweist, wobei die Schaltmittel die Zeilen-Speichermittel mit den geeigneten Zeilen der zweiten Speichermittel verbinden.

15. Bildkompressionssystem, **dadurch gekennzeichnet, dass** es eine Vorrichtung nach einem der vorhergehenden Ansprüche aufweist.

16. Vorrichtung zur Bewegungsschätzung durch Vergleich von Blöcken in einem Bildkompressionssystem auf der Basis von Blöcken, die eine Matrix von Zellen aufweisen, wobei jede Zelle aufweist:

Mittel (S, 403) zur Berechnung einer Fehlerfunktion zwischen einem Blockwert und einem Referenzfensterwert;

**dadurch gekennzeichnet, dass** jede Zelle außerdem Speichermittel (408, 407) aufweist, um mehrere Werte zu speichern, die für mindestens einen Block repräsentativ sind, dessen Bewegung zu schätzen ist;
einen Multiplexer (404, 405), der mit den Speichermitteln verbunden ist, um einen der mehreren Werte zu den Rechenmitteln zu multiplexieren.

FIG.1

DRAM

UGM — 112

bus

101

ENTRÉE

104

105

106

SORTIE

107

111

COPROCESSEUR

103

MV BUFF

114

MAX-AVR

113

RISC CONTRÔLEUR

102

INTERFACE MICROPROCESSEUR

115

RAM

108

ROM

109

EP 0 702 327 B1

FIG.2a

BLOC COURANT

BANDE

FENÊTRE
DE RÉFÉRENCE

IMAGE

FIG.2b

FIG.3

FIG.4

FIG. 8

FIG.5

FIG.6

FIG.7

EP 0 702 327 B1